(19) **Europäisches Patentamt**

**European Patent Office**

**Office européen des brevets**

(11) **EP 0 804 849 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(21) Anmeldenummer: **96900261.7**

(22) Anmeldetag: **10.01.1996**

(51) Int Cl.:
*H04M 1/72* (2006.01)          *H04B 7/04* (2006.01)
*H01Q 3/24* (2006.01)

(86) Internationale Anmeldenummer:
**PCT/DE1996/000020**

(87) Internationale Veröffentlichungsnummer:
**WO 1996/022646 (25.07.1996 Gazette 1996/34)**

(54) **EINRICHTUNG UND VERFAHREN ZUR ANTENNENAUSWAHL IN EINEM SCHNURLOSEN TELEFONSYSTEM**

DEVICE AND PROCESS FOR AERIAL SELECTION IN A WIRELESS TELEPHONE SYSTEM

DISPOSITIF ET PROCEDE POUR LE CHOIX DES ANTENNES DANS UN SYSTEME TELEPHONIQUE SANS FIL

(84) Benannte Vertragsstaaten:
**DE ES FR GB IT**

(30) Priorität: **20.01.1995 DE 19501688**

(43) Veröffentlichungstag der Anmeldung:
**05.11.1997 Patentblatt 1997/45**

(73) Patentinhaber: **SIEMENS AKTIENGESELLSCHAFT**
**80333 München (DE)**

(72) Erfinder:
• **EUSCHER, Christoph**
  **D-46414 Rhede (DE)**
• **GAPSKI, Dietmar**
  **D-47058 Duisburg (DE)**
• **PILLEKAMP, Klaus-Dieter**
  **D-40699 Erkrath (DE)**

(56) Entgegenhaltungen:
• **WIRELESS NETWORKS - CATCHING THE MOBILE FUTURE - 5TH IEEE INTERNATIONAL SYMPOSIUM ON PERSONAL, INDOOR AND MOBILE RADIO COMMUNICATIONS (PIMRC 94), AND ICCC REGIONAL MEETING ON WIRELESS COMPUTER NETWORKS (WCN), PROCEEDINGS OF WIRELESS NETWORKS CATCHING, Bd. 4, 18. - 23.September 1994, AMSTERDAM NL, Seiten 1075-1080 vol.4, XP000571909 P.E.MOGENSEN ET AL.: "ANTENNA CONFIGURATION MEASUREMENTS FOR DECT MICRO-CELLS"**
• **PATENT ABSTRACTS OF JAPAN vol. 013, no. 503 (E-844), 13.November 1989 & JP,A,01 202036 (TOSHIBA CORP), 15.August 1989,**
• **PATENT ABSTRACTS OF JAPAN vol. 011, no. 083 (E-489), 13.März 1987 & JP,A,61 237531 (MITSUBISHI ELECTRIC CORP), 22.Oktober 1986,**

EP 0 804 849 B1

**Beschreibung**

Die Erfindung bezieht sich auf ein Verfahren gemäß dem Oberbegriff des Patentanspruchs 1. Außerdem betrifft die Erfindung eine Einrichtung zur Durchführung dieses Verfahrens.

Die Reichweite in einem drahtlosen Kommunikationssystem, z.B. einem schnurlosen Telefon, das aus einer stationären und einer mobilen Funk-Sende-/Empfangseinrichtung besteht, wird im wesentlichen durch seine Sendeleistung und seine Empfängerempfindlichkeit bestimmt. Dabei wird die Sendeleistung in der Regel in alle Richtungen gleichmäßig, d.h. nahezu kugelförmig, abgestrahlt, um zum einen universell in jeder Umgebung einsetzbar zu sein und zum anderen in jeder Richtung die gleiche Reichweite zu erzielen. Wird jedoch ein einzelner Zeitpunkt betrachtet, so wird aus der Sicht der stationären Funk-Sende-/Empfangseinrichtung, also im Beispiel der Basisstation eines schnurlosen Telefons, nur ein Bruchteil der Sendeenergie in Richtung der mobilen Funk-Sende-/Empfangseinrichtung, also im Beispiel dem Mobilteil des schnurlosen Telefons, abgestrahlt. Der weitaus größte Teil der Sendeenergie wird dagegen nicht genutzt und kann auf fremde Geräte sogar störend wirken.

Wünschenswert wäre eine stationäre Funk-Sende-/Empfangseinrichtung mit einer scharf bündelnden Richtantenne, welche die zur Verfügung stehende Energie konzentriert in gerade diejenige Richtung abstrahlt, in der sich die mobile Funk-Sende-/Empfangseinrichtung augenblicklich befindet. Dazu wäre jedoch ein nicht unerheblicher Aufwand zur Ortung der mobilen Einrichtung, also im Beispiel dem Mobilteil eines schnurlosen Telefons, und zur exakten Ausrichtung der Richtantenne erforderlich.

Aus der JP-1-202036 ist ein Telekommunikationssystem bekannt, welches eine Basisstation mit einer Antenne mit einer veränderbaren Ausrichtung, einen Detektor für die Erfassung der Richtung oder des Ortes einer mit der Basisstation kommunizierenden Mobilstation und eine Einrichtung zur Steuerung der Ausrichtung der Antenne in die Richtung oder auf den Ort, die bzw. den der Detektor erfasst hat, aufweist.

Aus Wireless Networks - Catching The Mobile Future - 5Th IEEE International Symposium On Personal, Indoor And Mobile Radio Communications (PIMRC 94), and ICCC Regional Meeting On Wireless Computer Networks (WCN), Proceedings Of Wireless Networks Catching, Bd. 4, 18. - 23. September 1994, Amsterdam NL, Seiten 1075 - 1080 vol. 4, XP000571909 P. E. Mogensen et al.: "Antenna Configuration Measurements For DECT Micro-Cells" ist ein Versuchsaufbau zur Messung der Abstrahlcharakteristiken bestimmter Antennenkonfigurationen in einem Telekommunikationssystem mit DECT-Standard bekannt, bei dem die Signalübertragung zwischen einer mobilen Funk-Sende-Empfangseinrichtung und einer stationären Funk-Sende-Empfangseinrichtung überwacht ist. Es wird dabei festgestellt, welches Verbesserungspotential in der Verwendung von Richtantennen in der stationären Funk- Sende-Empfangseinrichtung liegt. Für so genannte diversity-Untersuchungen ist dabei ein aus zwei einzelnen, gleichzeitig aufzeichnenden Empfängern bestehender Doppelempfänger eingesetzt. Zur quasi gleichzeitigen Messung mit einer viergliedrigen Richtantennenkonfiguration ist eine Schalterkonfiguration integriert, die synchron mit einer im Hintergrund wirkenden TDMA-Rahmen-Rate schaltet.

Aufgabe der Erfindung ist es, eine erheblich weniger aufwendige Möglichkeit zur Verbesserung des Übertragungsverhaltens zwischen der mobilen und der stationären Funk-Sende-Empfangseinrichtung eines Telekommunikationssystems, insbesondere eines Schnurlostelefons, zu schaffen.

Diese Aufgabe wird bei einem Verfahren gemäß dem Oberbegriff des Patentanspruchs 1 durch die im kennzeichnenden Teil dieses Patentanspruchs angegebenen Merkmale gelöst.

Diese Form von Antennendiversity ist allerdings von jener zu unterscheiden, die eingesetzt wird, um Fadingeffekten entgegenzuwirken, und die aus dem deutschen Gebrauchsmuster 92 14 455 bekannt ist. Wird auf seiten der stationären Funk-Sende-/Empfangseinrichtung des Systems das gemäß der Erfindung ausgebildete Antennendiversity-Verfahren mit Richtantennen durchgeführt, so ist der Einsatz einer Anti-Fading Antennendiversity-Anordnung auf seiten der stationären Funk-Sende-/Empfangseinrichtung, also z.B. auf seiten der Basisstation eines Schnurlostelefons, nicht möglich, es sei denn, daß jede Richtantenne doppelt ausgeführt werden würde. Die Funktion des bekannten Anti-Fading Antennendiversitys läßt sich jedoch in die mobile Funk-Sende-/Empfangseinrichtung des Systems, also im Beispiel in das Mobilteil eines schnurlosen Telefons, verlagern, bzw. diese Funktion kann auf das Mobilteil beschränkt werden.

Zweckmäßige Weiterbildungen des im Patentanspruch 1 angegebenen Verfahrens sind in den Ansprüchen 2 bis 4 angegeben.

Eine Einrichtung zur Durchführung des Verfahrens nach der Erfindung sowie vorteilhafte Weiterbildungen und Ausführungsformen sind in den Ansprüchen 5 bis 8 dargelegt.

Die Erfindung und ihre wesentlichen Vorteile werden im folgenden anhand von neun Figuren erläutert, die allesamt Strahlungsverteilungen in einer Schnittebene, z.B. der horizontalen Schnittebene, zeigen.

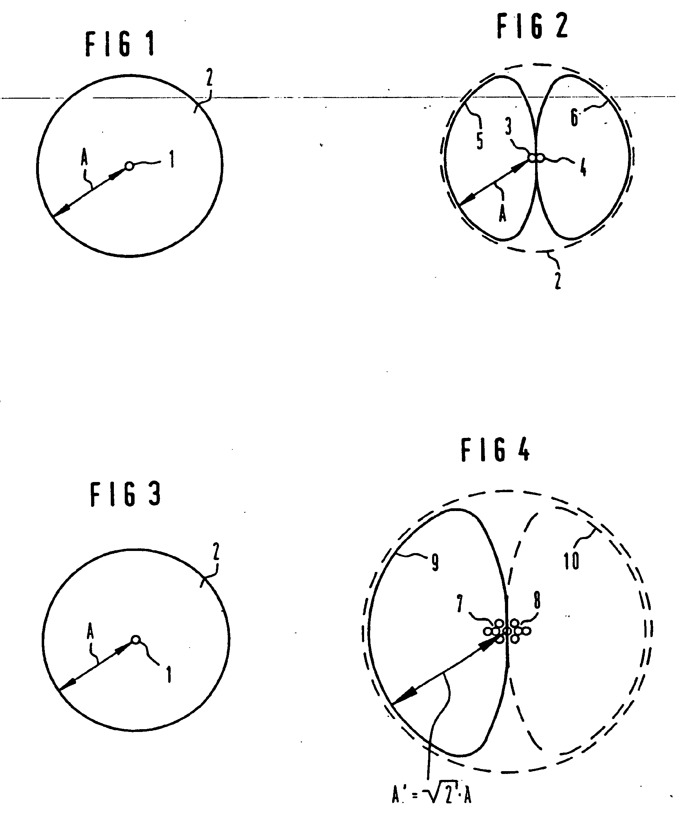

In Fig. 1 ist der bekannte Fall dargestellt, bei dem mittels einer Rundstrahlantenne 1 die Sendeleistung einer stationären Funk-Sende-/Empfangseinrichtung, z.B. der Basisstation eines schnurlosen Telefons, gleichmäßig in deren Umgebung abgegeben wird bzw. von einer mobilen Funk-Sende-/Empfangseinrichtung, z.B. also dem mobilen Teil des schnurlosen Telefons, stammende Funksignale von dieser stationären Funk-Sende-/Empfangseinrichtung gleichmäßig rundum empfangen werden. Die Antenne 1 hat somit eine sogenannte Rundstrahlcharakteristik 2, mit der in jede Richtung eine gleiche Reichweite A erzielt wird. Bei Betrachtung lediglich eines einzelnen Zeitpunktes wird von der stationären Funk-Sende-/Empfangseinrichtung nur ein Bruchteil der Sendeenergie in Richtung der mobilen Funk-Sende-/Empfangseinrichtung abgestrahlt, wogegen der weitaus größte Teil der Sendeenergie nicht ausgenutzt wird.

Fig. 2 zeigt demgegenüber die Aufteilung des gestrichelt dargestellten Gebiets mit der Reichweite A in zwei Teilräume. Jeder einzelne dieser beiden Teilräume wird von seiten der stationären Funk-Sende-/Empfangseinrichtung von je einer Antenne 3 bzw. 4 mit Richtcharakteristik 5 bzw. 6 ausgeleuchtet. Dabei ist nach Art von Antennendiversity jeweils diejenige der beiden Richtantennen 3 und 4 aktiv, in deren Teilraum sich die mobile Funk-Sende-/Empfangseinrichtung befindet. Da in dem in Fig. 2 dargestellten Fall die Reichweite A gleich bleibt, kann die Sendeleistung und die Empfängerempfindlichkeit der stationären Einrichtung reduziert werden.

Ein Vergleich der Fig. 3, in der in Übereinstimmung mit Fig. 1 die Rundstrahlcharakteristik 2 einer Antenne 1 einer stationären Funk-Sende-/Empfangseinrichtung, also z.B. der Basisstation eines schnurlosen Telefons, mit der Reichweite A dargestellt ist, mit der Fig. 4, in der über jeweils eine der beiden Richtantennen 7 und 8 jeweils bei Aktivschaltung die gleiche Energie abgestrahlt (Sendefall) wird bzw. die gleiche Empfängerempfindlichkeit (Empfangsfall) wie im Fall nach Fig. 3 besteht, zeigt, daß die dann erreichte Reichweite A' gegenüber der Reichweite A nach Fig. 3 um den Faktor $\sqrt{2}$ bei Freiraumausbreitung erhöht wird. Die Figuren 3 und 4 zeigen also den zu erwartenden Reichweitengewinn bei einem gemäß der Erfindung durchgeführten Antennendiversity und unveränderter Sendeleistung/Empfängerempfindlichkeit. Im Beispiel nach Fig. 4 ist zum dargestellten Zeitpunkt die mit durchgezogener Linie dargestellte Antennencharakteristik 9 der Richtantenne 7 aktiv geschaltet, wogegen die gestrichelt dargestellte Antennencharakteristik 10 der Richtantenne 8 im Augenblick nicht aktiv ist, da sich die mobile Funk-Sende-/Empfangseinrichtung in dem von der Richtantenne 7 abgedeckten Teilfunkraum mit der Reichweite A' befindet.

Es ist also festzustellen, daß eine Konzentration der Sendeleistung auf eine Halbkugel der Verdoppelung der in diese Halbkugel abgestrahlten Leistung entspricht. Eine Verdoppelung der Sendeleistung entspricht somit einer Erhöhung der Reichweite um den Faktor $\sqrt{2}$.

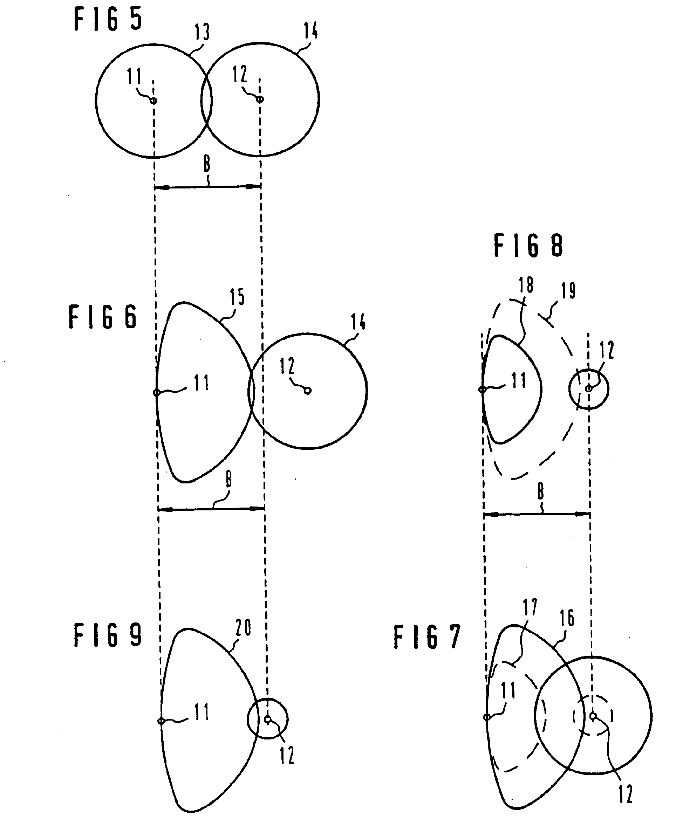

Anhand der Figuren 5 bis 9 werden wesentliche Vorteile des Verfahrens nach der Erfindung für ein aus einer Basisstation 11 und einem Mobilteil 12 bestehendes schnurloses Telefon erläutert. Im üblichen Fall, der in Fig. 5 dargestellt ist, weisen die Basisstation 11 und der Mobilteil 12 jeweils eine Antenne mit Rundstrahlcharakteristik 13 bzw. 14 auf. Der Abstand B zwischen der Basisstation 11 und dem Mobilteil 12 in diesem Beispiel ist so bemessen, daß bei den vorgesehenen Reichweiten gerade noch Funkkommunikation durchgeführt werden kann.

Fig. 6 zeigt nun den Fall, wie nach der Erfindung bei gegenüber dem Fall nach Fig. 5 unveränderter Sendeleistung bzw.

Empfängerempfindlichkeit durch Verwendung einer Antenne mit einer Richtcharakteristik 15 in der Basisstation 11 die Reichweite des Kommunikationssystems, im dargestellten Fall also des schnurlosen Telefons, um den Faktor $\sqrt{2}$ bei Freiraumausbreitung erhöht wird. Der Mobilteil 12 wird dann von der Basisstation 11 noch erreicht, wenn deren Abstand erheblich größer ist als der Abstand B im Fall nach Fig. 5, welche den Iststand vor der Erfindung zeigt. Wird das Verfahren nach der Erfindung nicht zur Erhöhung der Reichweite eingesetzt wie nach Fig. 6, so können die Anforderungen an die Empfängerempfindlichkeit der Basisstation 11 und des Mobilteils 12 reduziert werden, woraus sich in der Regel Möglichkeiten zur Kostenreduzierung ergeben. Diesen Fall zeigt Fig. 7, worin der Bereich, in dem das Sendesignal einen Normpegel nicht unterschreitet, jeweils mit einer durchgezogenen Linie und der Bereich, in dem ein Signal mit mindestens Normpegel empfangen werden kann, mit gestrichelten Linien dargestellt ist. Die Basisstation 11 sendet also hier mit einer durch den Gewinn der Richtcharakteristik 16 erhöhten Strahlungsleistung, so daß die gestrichelt dargestellte Empfindlichkeit des Empfängers des Mobilteils 12 verringert werden kann. Umgekehrt läßt sich bei Aussendung von Signalen von seiten des Mobilteils 12 aufgrund der Verwendung einer Richtantenne in der Basisstation 11 deren Empfängerempfindlichkeit ebenso reduzieren, da die verringerte Richtcharakteristik 17 (gestrichelt dargestellt) immer noch ausreicht, um vom Mobilteil 10 ausgesendete Signale einwandfrei zu empfangen.

Wird das Verfahren nach der Erfindung nicht zur Erhöhung der Reichweite eingesetzt, so kann alternativ zur Reduzierung der Empfängerempfindlichkeit, was anhand der Fig. 7 erklärt wurde, die Sendeleistung in der Basisstation 11 und im Mobilteil 12 reduziert werden. Dieser Fall ist in Fig. 8 dargestellt. Wegen des niedrigeren Energiebedarfs führt dies zu einer Erhöhung der Betriebsdauer des akkugespeisten Mobilteils 12. In Fig. 8 ist der Bereich, in dem das Sendesignal einen Normpegel nicht unterschreitet, mit durchgezogener Linie und der Bereich, in dem ein Signal mit mindestens Normpegel empfangen werden kann, mit gestrichelter Linie dargestellt. Im Fall von Sendungen von seiten der Basisstation 11 genügt aufgrund der Verwendung einer Richtcharakteristik 18 dort eine kleinere Sendeleistung zum funkmäßigen Erreichen des Mobilteils 12. Soll dagegen mit der Basisstation 11 empfangen werden, dann genügt eine verkleinerte Sendeleistung des Mobilteils 12, da die Basisstation 11 mit der gestrichelt dargestellten Richtcharakteristik 19 eine erhöhte Empfangsempfindlichkeit aufweist.

Ganz allgemein gilt, daß sich durch den Einsatz des Verfahrens nach der Erfindung eine Reduzierung der Störstrahlung ergibt. Es wird nämlich in denjenigen Teilraum, in dem sich das Mobilteil 12 nicht befindet, keine Leistung abgestrahlt, d.h. fremde Geräte innerhalb dieses Teilraumes werden nicht gestört. Wird das Verfahren der Erfindung nicht zur Reichweitenerhöhung verwendet, dann kann - wie bereits vorher ausgeführt wurde - die Sendeleistung des Mobilteils 12 reduziert werden. Dadurch verringert sich die Störwirkung auf fremde Systeme in der Umgebung des Mobilteils 12.

Anhand der Fig. 9 soll im folgenden noch erläutert werden, daß auch die Möglichkeit besteht, die verschiedenen Vorteile des Verfahrens nach der Erfindung im Mobilteil 12 zu vereinen.

Die Sendeleistung und die Empfängerempfindlichkeit der Basisstation 11 bleiben bis zum Antennenanschlußpunkt unverändert. Durch die in einem Teilfunkraum einen Gewinn bringende Richtcharakteristik 20 der Richtantenne steigen jedoch effektiv in diesem Teilfunkraum sowohl die Strahlungsleistung als auch die Empfängerempfindlichkeit.

Die "größere" effektive Sendeleistung der Basisstation 11 ermöglicht die Reduzierung der Empfängerempfindlichkeit des Mobilteils 12. Da es vorgesehen ist, daß eine Basisstation 11 den Kontakt zu mehreren Mobilteilen hält, kommt die Kosteneinsparung im Empfänger des Mobilteils 12 mehrfach zum Tragen.

Die "größere" effektive Empfindlichkeit der Basisstation 11 ermöglicht auch die Reduzierung der Sendeleistung des Mobilteils 12. Dadurch wird zum einen die Leistungsaufnahme des Mobilteils 12 verringert, d.h. es ergibt sich eine längere Betriebsdauer oder aber man kommt mit einem kleineren und damit günstigeren Akku aus. Zum anderen wird die Störwirkung auf fremde Systeme in der Nähe des Mobilteils 12 reduziert.

Die Richtantenne oder Richtantennen der stationären Funk-Sende-/Empfangseinrichtung lassen sich in zweckmäßiger Weise mittels einer Richtungsverstelleinrichtung unterschiedlich einstellen.

Als verstellbare Richtantennen können vorteilhaft sogenannte Quick-Heading-Beam-Antennen verwendet werden, die als eine Weiterentwicklung des vertikalen Halbwelleririchtstrahlers anzusehen sind und jeweils aus einem vertikalen Halbwellenstrahler mit vier Parasitärelementen bestehen, die im Abstand von je 0,15 λ (λ = Wellenlänge) vom Halbwellenstrahler angeordnet sind und deren Längen so umgeschaltet werden, daß sie wahlweise entweder als Direktoren oder Reflektoren wirken. Auf diese Weise erreicht man, daß der Richtstrahler mit seiner Hauptstrahlung durch entsprechendes Umschalten alle Richtungen bestreicht, ohne die Antenne mechanisch zu drehen. In seiner Wirkung entspricht die Quick-Heading-Beam-Antenne etwa einer 3-Elemente-Yagi-Antenne.

**Patentansprüche**

1. Verfahren zur Signalübertragung in einem Kommunikationssystem zwischen einer mobilen, mit einer mobilen Antenneneinrichtung versehenen Funk-Sende-/Empfangseinrichtung, insbesondere dem Mobilteil eines schnurlosen Telefons, und einer stationären, eine stationäre Antenneneinrichtung aufweisenden Funk-Sende-/Empfangseinrichtung, insbesondere der Basisstation eines schnurlosen Telefons, mit folgenden Verfahrensschritten:

- Ausleuchten des von der stationären Funk-Sende-/Empfangseinrichtung zu erfassenden Funkraums durch wenigstens zwei eigenständige Richtantennen (3, 4), die in ihrer Gesamtheit die stationäre Antenneneinrichtung bilden;
- Aufteilen des zu erfassenden Funkraums in Teilfunkräume;
- Abdecken eines jeweiligen Teilfunkraums des zu erfassenden Funkraums durch jeweils eine der wenigstens zwei eigenständigen Richtantennen (3, 4); und
- **gekennzeichnet durch** Aktivieren nach Antennendiversity-Art einer betreffenden Richtantenne (3) der wenigstens zwei vorhandenen eigenständigen Richtantennen (3, 4), in dessen betreffenden Teilfunkraum sich die mobile Funk-Sende-/Empfangseinrichtung befindet, wobei zu einem jeden Zeitpunkt sowohl beim Senden als auch beim Empfangen von Daten zu und von der mobilen Antenneneinrichtung jeweils nur eine einzige der wenigstens zwei vorhandenen eigenständigen Richtantennen (3) aktiv geschaltet ist.

2. Verfahren nach Anspruch 1, **dadurch gekennzeichnet, dass** die Summe der von allen Richtantennen (3, 4) der stationären Funk-Sende-/Empfangseinrichtung abgedeckten Teilfunkräume einen zumindest angenähert punktsymmetrischen Funkraum bildet.

3. Verfahren nach Anspruch 1, **gekennzeichnet, durch** eine manuell durchführbare Ausrichtbarkeit der Richtantennen (7, 8), so dass der von ihnen ausgeleuchtete Funkraum an die jeweils vorliegende Umgebung, z.B. ein Gebäude, angepasst werden kann.

4. Verfahren nach einem der vorhergehenden Ansprüche, **dadurch gekennzeichnet, dass** die Auswahl der jeweils zu aktivierenden Richtantenne (3, 4) anhand von vergleichenden Messungen der Empfangsfeldstärke in der stationären Funk-Sende-/Empfangseinrichtung vorgenommen wird.

5. Einrichtung zur Signalübertragung in einem Kommunikationssystem zwischen einer mobilen Funk-Sende-/Empfangseinrichtung, insbesondere dem Mobilteil eines schnurlosen Telefons, und einer stationären Funk-Sende-/Empfangseinrichtung, insbesondere der Basisstation eines schnurlosen Telefons, aufweisend eine mobile Antenneneinrichtung in der mobilen Funk-Sende-/Empfangseinrichtung und eine stationäre Antenneneinrichtung in der stationären Funk-Sende-/Empfangseinrichtung, wobei die stationäre Antenneneinrichtung aus wenigstens zwei eigenständigen Richtantennen (3, 4) gebildet ist, die zusammen einen Funkraum ausleuchten, der von der stationären Funk-Sende-/Empfangseinrichtung zu erfassen ist, wobei jede der wenigstens zwei eigenständigen Richtantennen (3, 4) jeweils einen zugehörigen Teilfunkraum des von der stationären Funk-Sende-/Empfangseinrichtung zu erfassenden Funkraums ausleuchtet, und **dadurch gekennzeichnet, dass** eine betreffende Richtantenne (3) der wenigstens zwei vorhandenen Richtantennen (3, 4) nach Antennendiversity-Art aktiviert ist, in dessen betreffenden Teilfunkraum sich die mobile Funk-Sende-/Empfangseinrichtung befindet, wobei zu einem jeden Zeitpunkt sowohl beim Senden als auch beim Empfangen von Daten zu und von der mobilen Antenneneinrichtung jeweils nur eine einzige der wenigstens zwei vorhandenen eigenständigen Richtantennen (3) aktiv geschaltet ist.

6. Einrichtung nach Anspruch 5, **dadurch gekennzeichnet, dass** eine Richtungsverstelleinrichtung für die Richtantennen (7, 8) der stationären Funk-Sende-/Empfangseinrichtung vorgesehen ist.

7. Einrichtung nach einem der Ansprüche 5 oder 6, **dadurch gekennzeichnet , dass** in der Funk-Sende-/Empfangseinrichtung eine Messeinrichtung vorgesehen ist, mittels welcher die Empfangsfeldstärken der über die einzelnen Richtantennen (3, 4) einfallenden, von einer mobilen Funk-Sende-/Empfangseinrichtung kommenden Signale gemessen werden, und dass eine Vergleichs- und Auswahleinrichtung vorgesehen ist, welche die Empfangsfeldstärken vergleicht und die größte davon ermittelt, so dass diejenige Richtantenne (3) aktiviert wird, an welcher die größte Empfangsfeldstärke vorliegt.

8. Einrichtung nach einem der Ansprüche 5 bis 7, **dadurch gekennzeichnet, dass** die Richtantennen (7, 8) der stationären Funk-Sende-/Empfangseinrichtung durch so genannte Quick-Heading-Beam-Antennen gebildet sind, die jeweils aus einem vertikalen Halbwellenstrahler mit vier Parasitärelementen bestehen, die im Abstand von je 0,15 λ (λ = Wellenlänge) vom Halbwellenstrahler angeordnet sind und deren Längen so umgeschaltet werden, dass sie wahlweise entweder als Direktoren oder Reflektoren wirken.

**Claims**

1. Method for signal transmission in a communication system between a mobile radio transmit/receive facility provided with a mobile antenna facility, in particular the mobile element of a cordless telephone, and a stationary radio transmit/receive facility having a stationary antenna facility, in particular the base station of a cordless telephone, with the following method steps:

    - coverage of the radio space to be acquired by the stationary radio transmit/receive facility by at least two separate directional antennas (3, 4), which together form the stationary antenna facility;
    - division of the radio space to be acquired into radio sub-spaces;
    - coverage of a respective radio sub-space of the radio space to be acquired by one of the at least two separate directional antennas (3, 4) respectively,

    **characterised by**

    - activation according to type of antenna diversity of a relevant directional antenna (3) of the at least two separate directional antennas present (3, 4), in the relevant radio sub-space of which the mobile radio transmit/receive facility is located, with only a single one of the at least two separate directional antennas present (3) respectively being switched to active at any time, both when transmitting and receiving data to and from the mobile antenna facility.

2. Method according to claim 1, **characterised in that** the sum of the radio sub-spaces covered by all the directional antennas (3, 4) of the stationary radio transmit/receive facility forms an at least approximately point-symmetrical radio space.

3. Method according to claim 1, **characterised by** a manually implementable alignment capacity of the directional antennas (7, 8) such that the radio space covered by them can be tailored to the respectively present environment, e.g. a building.

4. Method according to one of the preceding claims, **characterised in that** the directional antenna (3, 4) to be activated in each instance is selected based on comparative measurements of the receive field strength in the stationary radio transmit/receive facility.

5. Facility for signal transmission in a communication system between a mobile radio transmit/receive facility, in particular the mobile element of a cordless telephone, and a stationary radio transmit/receive facility, in particular the base station of a cordless telephone, having a mobile antenna facility in the mobile radio transmit/receive facility and a stationary antenna facility in the stationary radio transmit/receive facility, with the stationary antenna facility being formed from at least two separate directional antennas (3, 4), which together cover a radio space, which is to be acquired by the stationary radio transmit/receive facility, each of the at least two separate directional antennas (3, 4) respectively having an associated radio sub-space of the radio space to be acquired by the stationary radio transmit/receive facility and **characterised in that** a relevant directional antenna (3) of the at least two directional antennas present (3, 4) is activated according to type of antenna diversity, in the relevant radio sub-space of which the mobile radio transmit/receive facility is located, with only a single one of the at least two separate directional antennas present (3) respectively being switched to active at any time both when transmitting and also when receiving data to and from the mobile antenna facility.

6. Facility according to claim 5, **characterised in that** a direction adjustment facility is provided for the directional antennas (7, 8) of the stationary radio transmit/receive facility.

7. Facility according to one of claims 5 or 6, **characterised in that** a measuring facility is provided in the radio transmit/receive facility, by means of which the receive field strengths of the signals arriving by way of the individual directional antennas (3, 4) and coming from a mobile radio transmit/receive facility are measured and a comparison and evaluation facility is provided, which compares the receive field strengths and determines the greatest of them, such that the directional antenna (3), at which the greatest receive field strength is present, is activated.

8. Facility according to one of claims 5 to 7, **characterised in that** the directional antennas (7, 8) of the stationary radio transmit/receive facility are formed by so-called quick-heading-beam antennas, respectively comprising a vertical half-wave emitter with four parasitic elements, which are disposed at a distance of 0.15 $\lambda$ ($\lambda$ = wavelength) each from the half-wave emitter and the lengths of which are switched such that they optionally act as either directors or reflectors.

## Revendications

1. Procédé pour la transmission de signal dans un système de communication entre un dispositif d'émission/réception radio mobile, doté d'un dispositif d'antennes mobile, en particulier la partie mobile d'un téléphone sans fil, et un dispositif d'émission/réception radio fixe, présentant un dispositif d'antennes fixe, en particulier la station de base d'un téléphone sans fil, comprenant les étapes de procédé suivantes :

- sondage de l'espace radio à détecter par le dispositif d'émission/réception radio fixe par au moins deux antennes directives (3, 4) autonomes, qui forment dans leur totalité le dispositif d'antennes fixe ;
- répartition de l'espace radio à détecter en espaces radio partiels ;
- couverture d'un espace radio partiel respectif de l'espace radio à détecter par respectivement l'une des au moins deux antennes directives (3, 4) autonomes ; et

**caractérisé par** l'activation selon le type de diversité d'antennes d'une antenne directive (3) concernée des au moins deux antennes directives (3, 4) autonomes présentes, dans l'espace radio partiel concerné de laquelle se trouve le dispositif d'émission/réception mobile, à chaque fois seule une seule des au moins deux antennes directives (3) autonomes présentes étant commutée de façon active à tout moment aussi bien lors de l'émission que lors de la réception de données vers le dispositif d'antennes mobile ou à partir de celui-ci.

2. Procédé selon la revendication 1, **caractérisé en ce que** la somme des espaces radio partiels couverts par toutes les antennes directives (3, 4) du dispositif d'émission/réception radio fixe forme un espace radio au moins approximativement symétrique par rapport à un point.

3. Procédé selon la revendication 1, **caractérisé par** une orientabilité pouvant être réalisée manuellement des antennes directives (7, 8), de sorte que l'espace radio sondé par ces antennes peut être adapté à l'environnement respectivement présent, par exemple un bâtiment.

4. Procédé selon l'une quelconque des revendications précédentes, **caractérisé en ce que** le choix de l'antenne directive (3, 4) respective à activer est effectué à l'aide de mesures comparatives de l'intensité de champ de réception dans le dispositif d'émission/réception radio fixe.

5. Dispositif pour la transmission de signal dans un système de communication entre un dispositif d'émission/réception radio mobile, en particulier la partie mobile d'un téléphone sans fil, et un dispositif d'émission/réception radio fixe, en particulier la station de base d'un téléphone sans fil, présentant un dispositif d'antennes mobile dans le dispositif d'émission/réception radio mobile et un dispositif d'antennes fixe dans le dispositif d'émission/réception radio fixe, le dispositif d'antennes fixe étant formé d'au moins deux antennes directives (3, 4) autonomes, qui sondent ensemble un espace radio qui doit être détecté par le dispositif d'émission/réception radio fixe, chacune des au moins deux antennes directives (3, 4) autonomes sondant respectivement un espace radio partiel correspondant de l'espace radio à détecter par le dispositif d'émission/réception radio fixe, et **caractérisé en ce qu'**une antenne directive concernée (3) des au moins deux antennes directives (3, 4) présentes est activée selon le type de diversité d'antennes, dans l'espace radio partiel concerné de laquelle se trouve le dispositif d'émission/réception radio mobile, à chaque fois seule une seule des au moins deux antennes directives (3) autonomes présentes étant commutée de façon active à tout moment aussi bien lors de l'émission que lors de la réception de données vers le dispositif d'antennes mobile ou à partir de celui-ci.

6. Dispositif selon la revendication 5, **caractérisé en ce qu'**un dispositif de réglage de direction est prévu pour les antennes directives (7, 8) du dispositif d'émission/réception radio fixe.

7. Dispositif selon l'une quelconque des revendications 5 ou 6, **caractérisé en ce qu'**il est prévu dans le dispositif d'émission/réception radio un dispositif de mesure au moyen duquel les intensités du champ de réception des signaux produits par les antennes directives (3, 4) individuelles et venant d'un dispositif d'émission/réception radio mobile sont mesurées et **en ce qu'**un dispositif de comparaison et de choix est prévu, lequel compare les intensités du champ de réception et détermine la plus grande d'entre elles, de sorte qu'on active l'antenne directive (3) sur laquelle on a la plus grande intensité de champ de réception.

8. Dispositif selon l'une quelconque des revendications 5 à 7, **caractérisé en ce que** les antennes directives (7, 8) du dispositif d'émission/réception radio fixe sont formées par des antennes appelées antennes Quick-Heanding-Beam, qui sont constituées chacune d'une antenne à demi-ondes verticale avec quatre éléments parasitaires, lesquels sont disposés à la distance de 0,15 $\lambda$ ($\lambda$ = longueur d'onde) de l'antenne à demi-ondes et dont les longueurs sont commutées de telle sorte qu'elles agissent en option soit comme directeurs soit comme réflecteur.

## FIG 1

## FIG 2

## FIG 3

## FIG 4

$$A' = \sqrt{2} \cdot A$$

FIG 5

FIG 6

FIG 9

FIG 8

FIG 7